# EUROPÄISCHE PATENTSCHRIFT

(11) **EP 3 088 257 B1**
(45) Veröffentlichungstag und Bekanntmachung des Hinweises auf die Patenterteilung: **19.08.2020**
(21) Anmeldenummer: 16165756.4
(22) Anmeldetag: 18.04.2016
(51) Int. Cl.: B60R 19/56

(54) **UNTERFAHRSCHUTZEINRICHTUNG MIT VERSTELLVORRICHTUNG UND FAHRZEUG UMFASSEND EINE SOLCHE UNTERFAHRSCHUTZEINRICHTUNG**
UNDERRIDE BARRIER HAVING ADJUSTMENT APPARATUS AND VEHICLE COMPRISING SUCH AN UNDERRIDE BARRIER
PROTECTION ANTI-ENCASTREMENT COMPRENANT UN DISPOSITIF DE REGLAGE ET VEHICULE COMPRENANT UNE TELLE PROTECTION ANTI-ENCASTREMENT

(30) Priorität: 28.04.2015 DE 102015207799
(43) Veröffentlichungstag der Anmeldung: 02.11.2016
(73) Patentinhaber: Franz Xaver Meiller Fahrzeug- und Maschinenfabrik-GmbH & Co. KG, 80997 München (DE)
(72) Erfinder: SANKTJOHANSER, Paul, 82380 Peißenberg (DE); PADBERG, Christian, 82205 Gilching (DE)
(74) Vertreter: Weickmann & Weickmann PartmbB

(56) Entgegenhaltungen:
- CN-U- 203 920 656
- DE-A1- 19 928 104
- DE-U1-202007 003 715
- US-A- 5 520 428

## Beschreibung

Die vorliegende Erfindung betrifft eine Unterfahrschutzeinrichtung mit Verstellvorrichtung zur Anordnung an einem Fahrzeug gemäß dem Oberbegriff des Anspruchs 1.

Unterfahrschutzeinrichtungen insbesondere für Lastentransportfahrzeuge sind im Stand der Technik gut bekannt und umfassen im Allgemeinen eine längliche, horizontal angeordnete Unterfahrschutzbarriere zur Sicherung eines heckseitigen Bereichs eines Fahrzeuges gegen das Auffahren bzw. Unterfahren durch ein anderes Fahrzeug. Die Unterfahrschutzbarriere stellt somit für ein auffahrendes Fahrzeug einen definierten Kollisionsbereich bereit, welcher die Kollisionskräfte in die Knautschzone des auffahrenden Fahrzeugs einleitet. Da die Unterfahrschutzbarriere jedoch in einigen Betriebszuständen des Lastentransportfahrzeugs hinderlich sein kann, beispielsweise beim Be- und Entladen, bei einem Kippvorgang oder bei einem Einsatz mit einem Straßenfertiger, ist es bekannt, die Unterfahrschutzbarriere verstellbar zu gestalten.

Solche verstellbaren Unterfahrschutzeinrichtungen, wie sie beispielsweise aus der DE 93 07 389 U1 und der DE 10 2005 031 147 A1 bekannt sind, weisen einen Mechanismus zum Bewegen der Unterfahrschutzbarriere auf, um die Unterfahrschutzbarriere zwischen einer einen zu sichernden Bereich sperrenden Sicherungsstellung und einer den Bereich freigebenden Freigabestellung zu verstellen. Eine Unterfahrschutzeinrichtung gemäß dem Oberbegriff des Anspruchs 1 ist aus der DE 199 28 104 A1 bekannt.

Sicherheitsüberlegungen haben in verschiedenen Fällen dazu geführt, dass gefordert wurde, Unterfahrschutzeinrichtungen so zu gestalten und zu dimensionieren, dass die Unterfahrschutzbarriere in ihrer Sicherungsstellung einen relativ großen Abstand zu heckseitigen Rahmen- und Aufbauteilen des betreffenden Fahrzeugs sowohl in rückwärtiger Richtung als auch nach unten hin einnehmen kann. Damit ergab sich jedoch das Problem, dass es schwierig ist, eine so in ihrer Sicherungsstellung weit ausladende Unterfahrschutzbarriere beim Übergang in ihre Freigabestellung über entsprechend große Verstelldistanzen nahe genug ans Fahrzeugheck heranzuführen, so dass sie möglichst wenig Platz rückwärtig und unterhalb von heckseitigen Rahmen- und Aufbauteilen des Fahrzeugs einnimmt. Bisherige Vorschläge zur Lösung dieses Problems liefen häufig auf komplizierte, mehrgelenkige Trägerstrukturen für die Unterfahrschutzbarriere und auf zum Teil aufwändige Verstellmechanismen und Antriebe dafür hinaus, um relativ große und/oder einander überlagerte Verstellwege der Unterfahrschutzbarriere zu ermöglichen.

Andererseits sind einfach aufgebaute Unterfahrschutzeinrichtungen bekannt, bei denen nur ein Gelenk bzw. eine Schwenkachse zum Verschwenken der Unterfahrschutzbarriere erforderlich ist. Diese umfassen im Allgemeinen einen an einem Fahrzeug befestigten Befestigungsträger und einen drehbar am Befestigungsträger gelagerten Trägerarm, an dem die Unterfahrschutzbarriere angeordnet ist. Eine Verstellvorrichtung mit einem hydraulischen Zylinder als Antrieb bewirkt das Verschwenken des Trägerarms und damit die Bewegung der Unterfahrschutzbarriere. Aufgrund der Platzverhältnisse innerhalb der Unterfahrschutzeinrichtung und der sich ändernden Ausrichtung des Befestigungsträgers relativ zu dem Trägerarm beim Verschwenken der Unterfahrschutzbarriere ist der mittels eines hydraulischen Zylinders realisierbare Schwenkwinkel des Trägerarms bei diesen bekannten einfach aufgebauten Unterfahrschutzeinrichtungen nicht sehr groß und liegt bei maximal etwa 125°. Dadurch sind jedoch die Möglichkeiten eingeschränkt, die Unterfahrschutzbarriere einerseits in der Sicherungsstellung möglichst weit nach hinten und nach unten am Heck des Fahrzeugs abstehen zu lassen und andererseits die Unterfahrschutzbarriere zur Einbringung in die Freigabestellung nahe an heckseitige Rahmen- und Aufbauteile heranzuführen.

Vor diesem Hintergrund ist es Aufgabe der vorliegenden Erfindung eine einfach aufgebaute Unterfahrschutzeinrichtung mit Verstellvorrichtung der oben genannten Art bereitzustellen, bei welcher ein erheblich größerer Schwenkwinkel erzielbar ist.

Zur Lösung dieser Aufgabe wird gemäß der vorliegenden Erfindung eine Unterfahrschutzeinrichtung mit Verstellvorrichtung gemäß Anspruch 1 und ein Fahrzeug umfassend eine solche Unterfahrschutzeinrichtung mit Verstellvorrichtung gemäß Anspruch 11 bereitgestellt. Vorteilhafte Ausgestaltungen sind Gegenstand der abhängigen Ansprüche.

Die erfindungsgemäße Unterfahrschutzeinrichtung mit Verstellvorrichtung weist einen Befestigungsträger, einen drehbar am Befestigungsträger gelagerten Trägerarm und eine daran angeordnete Unterfahrschutzbarriere auf. Die Verstellvorrichtung zum Verschwenken des Trägerarms um eine vorzugsweise horizontale Schwenkachse weist einen Antrieb und ein durch den Antrieb drehbares und mit dem Trägerarm verbundenes Drehelement auf. Darüber hinaus umfasst die erfindungsgemäße Unterfahrschutzeinrichtung eine zwischen dem Antrieb und dem Drehelement geschaltete mechanische Übersetzungsvorrichtung. Der Antrieb wirkt dabei nicht direkt auf das Drehelement sondern auf ein Element der mechanischen Übersetzungsvorrichtung, so dass Antriebskräfte bzw. -momente über die Elemente der mechanischen Übersetzungsvorrichtung auf das Drehelement übertragen werden und dieses zur Drehung antreiben. Dabei ist das Übersetzungsverhältnis so gewählt, dass ein ausreichender Verschwenkwinkel des Trägerarms relativ zum Befestigungsträger größer als 150° erzielt ist, wobei besonders vorteilhaft ein Verschwenkwinkel von180° erzielbar ist, bei dem sich die Längen des Befestigungsträgers und des Trägerarms vollständig addieren. Dadurch ist eine Unterfahrschutzeinrichtung mit Verstellvorrichtung realisiert, die mit nur einer Drehachse und ohne komplizierte Gelenkmechanik und unter Nutzung eines Antriebs, welcher insbesondere ein hydraulischer, pneumatischer oder elektrischer Antrieb sein kann, ein ausreichender Verstellweg und damit Abstand der Positionen der Unterfahrschutzbarriere in der Sicherungsstellung und der Freigabestellung erzielt. Technisch vorteilhaft ist dabei insbesondere, dass die erfindungsgemäße Unterfahrschutzeinrichtung mit Verstellvorrichtung wenig Platz erfordert und gleichzeitig automatisch bzw. maschinell betätigt werden kann.

Bevorzugt umfasst die Übersetzungsvorrichtung eine Zahnradpaarung und/oder eine Zahnrad-Zahnstangen-Paarung. Solche Zahnräder oder Zahnstangen lassen sich leicht zwischen Antrieb und Drehelement am Befestigungsträger anordnen und sind gleichzeitig robust und witterungsbeständig. Insbesondere kann die Übersetzungsvorrichtung auch durch nur eine Zahnradpaarung und/oder eine Zahnrad-Zahnstangen-Paarung ausgebildet sein.

Bevorzugt wird bei der Zahnradpaarung bzw. der Zahnrad-Zahnstangen-Paarung noch ein Kurbelhebel zwischen dem Antrieb und der Zahnradpaarung bzw. der Zahnrad-Zahnstangen-Paarung vorgesehen. Dieser erlaubt, insbesondere wenn er den Antrieb mit einem Zahnrad verbindet, dass der Antrieb das Zahnrad mit einem relativ großen Hebel antreibt, wodurch der Antrieb eine geringere Kraft aufbringen muss. Insbesondere lässt sich so die Kopplung zwischen Linearantrieb und Zahnrad in vorteilhafter und einfacher Weise realisieren.

Bevorzugt lässt sich die Zahl der Zähne auf den beiden Zahnrädern der Zahnradpaarung bzw. dem Zahnrad und der Zahnstange der Zahnrad-Zahnstangen-Paarung so unterschiedlich wählen, dass ein bestimmtes Übersetzungverhältnis ausgebildet wird. Dabei kommen vor allem Übersetzungsverhältnisse größer als 1 und kleiner als 3 infrage, wobei bevorzugt ein Übersetzungsverhältnis von ungefähr 1,5 ist, denn dann kann mit einem durch den Antrieb bewirkten Schwenkwinkel von 120° des entsprechenden mit dem Antrieb gekoppelten Zahnrads ein Schwenkwinkel von 180° des Trägerarms erreicht werden. Dies ist vorteilhaft, da solche Antriebsschwenkwinkel von 120° technisch leicht zu realisieren sind.

Bevorzugt sind an den Zahnrädern der Zahnradpaarung bzw. dem Zahnrad und der Zahnstange der Zahnrad-Zahnstangen-Paarung jeweils Blockierbereiche ausgebildet. Mit Blockierbereichen sind hier Bereiche ohne Zähne gemeint. Diese bewirken, dass beispielsweise zwei Zahnräder, die ineinandergreifen, nicht mehr weiter drehen, also blockiert sind, wenn der Blockierbereich ohne Zähne in den Bereich des Eingriffs der Zahnräder hineingedreht wird. Denn dann drücken die Blockierbereiche bzw. ein Blockierbereich gegen die Zähne des anderen Zahnrads, was aufgrund der festen Verankerung der Zahnräder dazu führt, dass sie stillstehen. In äquivalenter Weise ist dies bei der Kombination Zahnstange mit Zahnrad möglich. Durch geeignete Anordnung der Blockierbereiche lässt sich damit eine zu weit gehende Bewegung der Zahnstange bzw. zu weite Drehung der Zahnräder, nämlich über die Position hinaus, die der Freigabestellung bzw. der Sicherungsstellung entspricht, blockieren. Dadurch ist die Mechanik und der Antrieb gegen ein zu weites Verdrehen bzw. Verschwenken des Trägerarms zusätzlich geschützt.

Bevorzugt umfasst die erfindungsgemäße Unterfahrschutzeinrichtung mit Verstellvorrichtung noch mindestens einen Sensor, der dazu ausgebildet ist, die Position der Unterfahrschutzbarriere direkt oder indirekt zu bestimmen. Dabei kann die indirekte Bestimmung der Position über die Position, Einstellung und/oder Drehung des Trägerarms, des Drehelements, des Antriebs, der Übersetzungsvorrichtung und/oder von Teilen der Übersetzungsvorrichtung bestimmt werden. Beispielsweise kann ein Sensor bei Nutzung eines Kurbelhebels so ausgerichtet sein, dass er den Kurbelhebel erfasst, wenn die Unterfahrschutzbarriere in der Sicherungsstellung ist. Erfasst der Sensor dann den Kurbelhebel nicht, ist bekannt, dass die Unterfahrschutzbarriere nicht in der Sicherungsstellung ist. Alternativ kann ein Sensor auf eine Zahnstange oder ein Zahnrad ausgerichtet sein und erfassen, ob in seinem Erfassungsbereich Zähne oder der Blockierbereich sind. Damit ist dann bekannt, ob die Unterfahrschutzbarriere in der Sicherungsstellung bzw. der Freigabestellung ist. Dies kann vorteilhaft genutzt werden indem der Sensor dazu ausgebildet ist, Daten und bevorzugt die Information über die Position der Unterfahrschutzbarriere über Leitungen und/oder über Funk an eine Steuereinrichtung eines Fahrzeugs zu übertragen. Diese Steuereinrichtung kann dann bei entsprechenden Betriebsmodi des Fahrzeuges, die eine bestimmte Stellung der Unterfahrschutzbarriere erfordern, beispielsweise die Freigabestellung beim Kippen und Entladen der Ladefläche, steuernd reagieren, um so einen sicheren Betrieb zu garantieren. Bevorzugt ist der Sensor an dem Befestigungsträger angeordnet, da an diesem erfindungsgemäss die mechanische Übersetzungsvorrichtung angeordnet ist, anhand derer leicht bestimmt werden kann, ob die Unterfahrschutzbarriere in der Sicherungsstellung oder der Freigabestellung ist.

Die Übersetzungsvorrichtung der erfindungsgemäßen Unterfahrschutzeinrichtung mit Verstellvorrichtung ist so ausgebildet, dass der Trägerarm um mindestens 150° und bevorzugt um 180° um eine durch das Drehelement verlaufende Drehachse schwenkbar ist. Dabei kann das Drehelement insbesondere auch als Gelenk bzw. Drehgelenk bzw. Drehachsenstift ausgebildet sein und so eine dreh- bzw. schwenkbare Lagerung des Trägerarms an dem Befestigungsträger bilden. Durch eine Schwenkbewegung um 180° ist der Trägerarm in der Freigabestellung der Länge nach nahe dem Befestigungsträger positioniert, so dass die Ausdehnung der Unterfahrschutzeinrichtung minimal ist. Hingegen können sich die Längen des Befestigungsträgers und des Trägerarms nach dem Verschwenken um 180° vollständig addieren, so dass die Unterfahrschutzbarriere weit nach unten und nach hinten heckseitig an dem Fahrzeug in eine für die Sicherungsstellung geeignete Position verfahrbar ist.

In einer bevorzugten Ausführungsform ist der Antrieb als Linearantrieb ausgebildet, insbesondere als ein durch eine Vorrichtung eines Fahrzeugs antreibbarer hydraulischer Zylinder, gegebenenfalls auch als pneumatischer Zylinder. Der Zylinder kann in vorteilhafter Weise auf einer Seite gelenkig am Befestigungsträger oder an einem Teil, beispielsweise dem Rahmen, eines Fahrzeugs gelenkig angebracht werden und auf der anderen Seite mit einer Zahnstange, einem Zahnrad oder einem mit einem Zahnrad verbundenen Kurbelhebel verbunden sein. Durch die Linearbewegung des Zylinderantriebs kann dann die Zahnstange bzw. durch außermittige Befestigung das Zahnrad oder der mit dem Zahnrad verbundene Kurbelhebel zu einer Bewegung angetrieben werden, die dann über die mechanische Übersetzungsvorrichtung und mit der entsprechenden Übersetzung auf das das Drehelement übertragen wird. Als Linearantrieb kann auch ein elektrischer Spindel-Mutter-Antrieb in Frage kommen.

In einer anderen bevorzugten Ausführungsform ist der Antrieb als Rotationsantrieb, vorzugsweise elektrischer Rotationsantrieb ausgebildet. Ein solcher kann insbesondere in technisch einfacher Weise ein Zahnrad der mechanischen Übersetzungsvorrichtung antreiben, um dann mit entsprechendem Übersetzungsverhältnis das Drehelement zur Drehung anzutreiben. Bevorzugt ist ein solcher Rotationsantrieb ein Elektromotor, der z.B. aus dem Bordnetz des Fahrzeugs mit elektrischer Energie versorgt werden kann.

Ferner kann bevorzugt am Befestigungsträger ein Anschlagsvorsprung ausgebildet werden, der so ausgebildet ist, dass er die Bewegung des Trägerarms sowohl in der Freigabestellung als auch in der Sicherungsstellung be grenzt. Dadurch ist ähnlich und alternativ oder zusätzlich zu dem vorher beschriebenen Blockierbereich eine Begrenzung der Schwenkbewegung des Trägerarms erreichbar, so dass der Trägerarm aufgrund des Anschlags an dem Anschlagsvorsprung nicht über die Freigabestellung bzw. die Sicherungsstellung hinaus verschwenkt werden kann. Dabei lässt sich insbesondere der Anschlagsvorsprung so ausbilden, dass er für beide Stellungen begrenzend bzw. blockierend wirkt. Dadurch ist die Sicherheit des Betriebs der Unterfahrschutzeinrichtung mit Verstellvorrichtung zusätzlich erhöht.

Gegenstand der Erfindung ist neben der erfindungsgemäßen Unterfahrschutzeinrichtung mit Verstellvorrichtung ein Fahrzeug, das eine solche erfindungsgemäße Unterfahrschutzeinrichtung umfasst. Dabei werden bevorzugt Lastkraftwagen, Anhänger, Sattelauflieger oder andere Lasttransportfahrzeuge mit einer solchen erfindungsgemäßen Unterfahrschutzeinrichtung versehen und sind in dieser Kombination ebenfalls Gegenstand der vorliegenden Erfindung. Bevorzugt ist eine Steuervorrichtung eines solchen Fahrzeugs so ausgebildet, dass eine Aktivierung eines heckseitigen mechanischen Betriebsvorgangs des Fahrzeugs durch die Steuervorrichtung blockierbar ist, wenn die Unterfahrschutzbarriere nicht in einer bestimmten Stellung, z.B. der Freigabestellung ist. Es ist somit denkbar, dass die Steuervorrichtung dazu ausgebildet ist, allgemein bestimmte Betriebsmodi zu blockieren, wenn sich die Unterfahrschutzbarriere nicht in der für den Betriebsmodus vorgesehen Stellung befindet.

Alternativ oder zusätzlich kann die Steuervorrichtung auch ein Warnsignal abgeben bzw. eine Blockierung auslösen, die durch den Bediener abschaltbar ist. Ein Beispiel wäre, dass das Losfahren mit dem Fahrzeug und/oder das Überschreiten von bestimmten Geschwindigkeiten, beispielsweise schneller als Schritttempo, nur möglich ist bzw. entsprechende Warnungen erzeugt werden, wenn die Unterfahrschutzbarriere in der Sicherungsstellung ist. Dies ist vorteilhaft, da es für bestimmte Fahrzeugtypen gesetzliche Vorschriften gibt, dass diese nur am Straßenverkehr teilnehmen dürfen, wenn die Unterfahrschutzbarriere entsprechend positioniert ist. Da eine Teilnahme am Straßenverkehr im Allgemeinen mit Überschreiten der Schrittgeschwindigkeit verbunden ist, kann so in einfacher Weise ein System realisiert wer den, dass dem Bediener die Einhaltung der entsprechenden gesetzlichen Vorschriften erleichtert.

Erfindungsgemäß lassen sich für die mechanische Übersetzungsvorrichtung der Verstellvorrichtung der Unterfahrschutzeinrichtung auch andere geeigne te mechanische Übersetzungsvorrichtungen nutzen, also anstelle von- oder zusätzlich zu Zahnradübersetzungen z.B. Kettengetriebe, Lenkergetriebe bzw. Schwingkurbelgetriebe usw..

Unter Bezugnahme auf die Figuren wird nachstehend ein Ausführungsbeispiel der Erfindung mit einer bestimmten Merkmalskombination dargestellt.
- Figur 1: zeigt eine Unterfahrschutzeinrichtung mit Verstellvorrichtung in perspektivischer Teildarstellung am Heck eines Lastentransportfahrzeugs, wobei die Unterfahrschutzbarriere in der Sicherungsstellung ist.
- Figur 2: zeigt die Unterfahrschutzeinrichtung aus Figur 1 aus einem anderen Blickwinkel.
- Figur 3: zeigt eine Unterfahrschutzeinrichtung aus Fig. 1 und Fig. 2 mit in Freigabestellung befindlicher Unterfahrschutzbarriere.
- Figur 4: zeigt die Unterfahrschutzeinrichtung mit Verstellvorrichtung wie in Figur 3 aus einem anderen Blickwinkel.

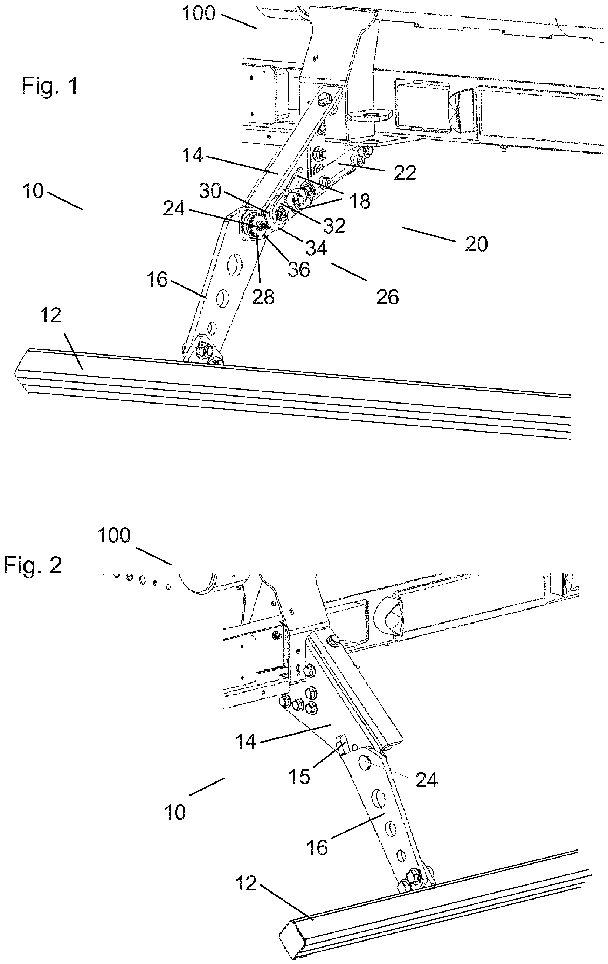

Wie in Figur 1 und Figur 2 gezeigt, umfasst die Unterfahrschutzeinrichtung 10 mit Verstellvorrichtung 20 eine Unterfahrschutzbarriere 12 zur Sicherung eines heckseitigen Bereichs eines Fahrzeugs 100. Diese Unterfahrschutzbarriere 12 ist an einem drehbar an einem Befestigungsträger 14 gelagerten Trägerarm 16 angeordnet und die Verstellvorrichtung 20 dient zum Verschwenken des Trägerarms 16, um die Unterfahrschutzbarriere 12 zu verstellen.

Die Verstellvorrichtung 20 ist ein Teil der Unterfahrschutzeinrichtung 10 und umfasst einen hydraulischen Linearantrieb, nämlich einen hydraulischen Zylinder 22, der gelenkig mit einem Rahmen des Fahrzeugs 100 verbunden ist. Im gezeigten Beispielsfall ist der hydraulische Zylinder 22 kolbenstangenseitig mit einem Kurbelhebel 32 gelenkig verbunden, der wiederum exzentrisch an ein Zahnrad 30 gekoppelt ist. Dieses Zahnrad 30 steht in Eingriff mit dem Zahnrad 28, welches wiederum mit dem Drehelement 24 verbunden ist, das hier als eine Art stangenartige Drehachse oder -welle ausgebildet ist, die durch ein Loch des Befestigungsträgers 14 geführt- und mit dem Trägerarm verbunden ist.

Wie ersichtlich, ist die Anzahl der Zähne der Zahnräder 28 und 30 bzw. ist der Durchmesser der Zahnräder 28 und 30 unterschiedlich, so dass diese zusammen eine mechanische Übersetzungsvorrichtung 26 ausbilden. Das Verhältnis der Anzahl der Zähne bzw. das Verhältnis der Durchmesser der Zahnräder 28, 30 bestimmt dabei das Übersetzungsverhältnis der mechanischen Übersetzungsvorrichtung 26. Der Kurbelhebel 32 kann in dieser Ausführungsform ebenfalls als Teil der mechanischen Übersetzungsvorrichtung 26 angesehen werden.

Ferner sind an einer Seite des Befestigungsträgers 14 zwei Sensoren 18 angeordnet und an der anderen Seite des Befestigungsträgers 14 ist ein Anschlagsvorsprung 15 angeordnet. Die Sensoren 18 sind dabei als Näherungssensoren ausgebildet und ein Sensor 18 ist so angeordnet, dass ihm der Kurbelhebel 32 in der Sicherungsstellung nahe ist. Der andere Sensor 18 ist auf das Zahnrad 30 ausgerichtet. Die Zahnräder 28 und 30 umfassen neben den Zähnen ferner Blockierbereiche 36 und 34.

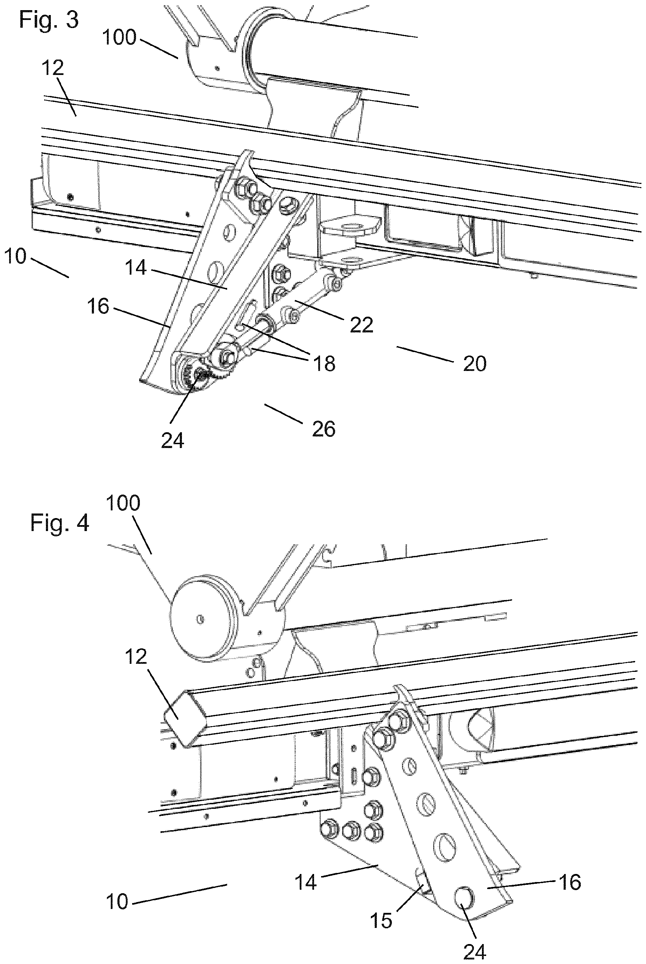

Wie aus den Figuren 2 und 4 ersichtlich ist, ist der Anschlagsvorsprung 15 in Bezug auf den Trägerarm 16 so an dem Befestigungsträger 14 angebracht und ausgebildet, dass der Trägerarm 16 sowohl in der Sicherungsstellung (Figur 2) als auch in der Freigabestellung (Figur 4) an dem Anschlagsvorsprung 15 anliegt. Dadurch begrenzt der Anschlagsvorsprung 15 den Schwenkbereich und damit den Schwenkwinkel des Trägerarms 16, so dass der Trägerarm 16 genau so weit verfahren werden kann, dass die Unterfahrschutzbarriere 12 die Sicherungsstellung bzw. die Freigabestellung erreicht und eine weitere Bewegung darüber hinaus durch den Anschlagsvorsprung 15 blockiert ist.

Wie anhand der Figuren 1 und 3 ersichtlich ist, erfolgt das Verstellen der Unterfahrschutzbarriere 12 von der Sicherungsstellung in die Freigabestellung bzw. umgekehrt durch Betätigung des Linearantriebs, also durch Ausfahren bzw. Einziehen der Kolbenstange des Zylinders 22. Wenn in der in Figur 1 gezeigten Sicherungsstellung der hydraulische Zylinder 22 aktiviert wird, be wegt seine ausfahrende Kolbenstange den Kurbelhebel 22 entlang eines Kreisbogens von ungefähr 120° bis zu der in Figur 3 gezeigten Position. Da durch wird das mit dem Kurbelhebel 32 verbundene Zahnrad 30 gedreht. Dieses wiederum dreht das mit dem Zahnrad 30 in Eingriff stehende Zahnrad 28. Da die Anzahl der Zähne bzw. die Durchmesser unterschiedlich sind, wird das Zahnrad 28 um einen größeren Winkel als das Zahnrad 30 gedreht. Dadurch führt die Drehung des Zahnrads 30 um einen Winkel von ungefähr 120° zu einer Drehung des Zahnrads 28 und damit des damit verbundenen Drehelements 24 und damit wiederum zu einer Drehung des damit verbundenen Trägerarms 16 um 180°. Damit wird die Unterfahrschutzbarriere 12 in die in Figur 3 gezeigte Freigabestellung bewegt.

In äquivalenter Weise kann die Unterfahrschutzbarriere 12 aus der in Figur 3 gezeigten Freigabestellung in die in der Figur 1 gezeigten Sicherungsstellung verfahren werden. Dafür wird entsprechend der hydraulische Zylinder 22 betätigt, um dessen Kolbenstange wieder einzufahren und so den Kurbelhebel 32 wieder in die in Figur 1 gezeigte Position zurückzubewegen. Dementsprechend werden auch wieder die beiden Zahnräder 28 und 30 in Bewegung gesetzt, wobei entsprechend dem Übersetzungsverhältnis das Zahnrad 28, das damit verbundene Drehelement 24 und der damit verbundene Trägerarm 16 um einen entsprechend größeren Winkel gedreht werden, wodurch die Unterfahrschutzbarriere 12 wieder in die Sicherungsstellung gelangt.

Wie in Figur 3 gezeigt, ist dabei ein Blockierbereich 36 des Zahnrads 28 und/oder ein Blockierbereich 34 des Zahnrads 30, also jeweils Umfangsbereiche des Zahnrads ohne Zähne, so angeordnet, dass in Freigabestellung und in Sicherungsstellung jeweils eine weitere Drehung der Zahnräder in der Richtung, die einem Drehen über die Sicherungsstellung bzw. Freigabestellung hinaus entspricht, blockiert ist. Dabei können die Blockierbereiche auf den beiden Zahnrädern auch so ausgelegt sein, dass der eine Blockierbereich bei einem Drehen über die Sicherungsstellung hinaus blockiert, während der andere Blockierbereich bei einem Drehen über die Freigabestellung hinaus blockiert. Die Blockierbereiche 34 und 36 können aber auch, wie gezeigt, so ausgebildet sein, dass sie jeweils beide in beiden Fällen blockieren.

Wie in Figur 3 ersichtlich, ist der Kurbelhebel 32 in der Freigabestellung von einem der Sensoren 18 weit entfernt, während er, wie in Figur 1 ersichtlich, in der Sicherungsstellung nahe an dem Sensor 18 ist. Dadurch kann der Sensor 18, insbesondere wenn er als Näherungssensor ausgebildet ist, eindeutig feststellen, ob die Unterfahrschutzbarriere 12 in der Sicherungsstellung ist, nämlich genau dann, wenn der Kurbelhebel 32 von dem entsprechend eingestellten Näherungssensor 18 erfasst wird.

Der andere Sensor 18 ist auf das Zahnrad 30 ausgerichtet, und kann bei entsprechender Auslegung den Übergang Zahnbereich-zu-Blockierbereich 34 erfassen bzw. erkennen, ob in seinem Messbereich gerade Zähne oder der Blockierbereich 34 ist. Dementsprechend kann dieser andere Sensor 18 ebenfalls bestimmen, ob die Unterfahrschutzbarriere 12 in der Freigabestellung oder der Sicherungsstellung ist. Insbesondere kann durch die Überwachung der Bewegung der Zähne und des Blockierbereichs 34 auch der genaue momentane Schwenkwinkel bestimmt werden, womit es auch möglich wäre, die Unterfahrschutzbarriere 12 in einer gewünschten Position zwischen der Sicherungsstellung und der Freigabestellung zu positionieren. Dies kann für spezielle Anwendungsfälle vorteilhaft sein.

In nicht gezeigter Weise können die Sensoren 18 dabei über Funk und/oder Kabelverbindungen elektrisch mit einer Steuereinrichtung des Fahrzeugs 100 verbunden werden, damit diese in Abhängigkeit von der Position der Unterfahrschutzbarriere 12 verschiedene Betriebsfunktionen, wie beispielsweise Kippvorgänge der Ladefläche des Fahrzeugs, in Abhängigkeit von der Position der Unterfahrschutzbarriere 12 blockiert bzw. spezifisch begrenzt oder steuert.

## Patentansprüche

1. Unterfahrschutzeinrichtung (10) mit Verstellvorrichtung (20) zur Anordnung an einem Fahrzeug (100) umfassend eine längliche, normalerweise horizontal angeordnete Unterfahrschutzbarriere (12) zur Sicherung eines heckseitigen Bereichs des Fahrzeugs (100) gegen das Auffahren bzw. Unterfahren durch ein anderes Fahrzeug, einen Befestigungsträger (14), einen drehbar am Befestigungsträger (14) gelagerten Trägerarm (16), an dem die Unterfahrschutzbarriere (12) angeordnet ist, und eine Verstellvorrichtung (20) zum Verschwenken des Trägerarms (16), um die Unterfahrschutzbarriere (12) zwischen einer den zu sichernden Bereich sperrenden Sicherungsstellung und einer den Bereich freigebenden Freigabestellung zu verstellen, wobei die Verstellvorrichtung (20) einen Antrieb (22) und ein durch den Antrieb (22) drehbares und mit dem Trägerarm (16) verbundenes Drehelement (24) aufweist, wobei eine Drehung des Drehelements (24) durch den Antrieb (22) ein Verschwenken des Trägerarms (16) relativ zu dem Befestigungsträger (14) bewirkt, wobei zwischen dem Antrieb (22) und dem Drehelement (24) eine mechanische Übersetzungsvorrichtung (26) geschaltet ist, **dadurch gekennzeichnet, dass**
der Trägerarm (16) über nur eine Drehachse am Befestigungsträger (14) gelagert ist;
die mechanische Übersetzungsvorrichtung (26) am Befestigungsträger (14) angeordnet ist;
und die Übersetzungsvorrichtung (20) so ausgebildet ist, dass der Trägerarm (16) um mindestens 150° um die durch das Drehelement (24) verlaufende Drehachse schwenkbar ist.

2. Unterfahrschutzeinrichtung (10) nach Anspruch 1, **dadurch gekennzeichnet, dass** die Übersetzungsvorrichtung (26) eine Zahnradpaarung (28, 30) und/oder eine Zahnrad-Zahnstangen-Paarung umfasst.

3. Unterfahrschutzeinrichtung (10) nach Anspruch 2, **dadurch gekennzeichnet, dass** die Übersetzungsvorrichtung (26) einen Kurbelhebel (32) zwischen dem Antrieb (22) und der Zahnradpaarung (28, 30) bzw. der Zahnrad-Zahnstangen-Paarung aufweist.

4. Unterfahrschutzeinrichtung (10) nach Anspruch 2 oder 3, **dadurch gekennzeichnet, dass** die Zahl der Zähne auf den beiden Zahnrädern (28, 30) der Zahnradpaarung (28, 30) bzw. dem Zahnrad und der Zahnstange der Zahnrad-Zahnstangen-Paarung unterschiedlich ist, um ein bestimmtes Übersetzungsverhältnis auszubilden, insbesondere ein Übersetzungsverhältnis größer als 1 und kleiner als 3, bevorzugt 1,5.

5. Unterfahrschutzeinrichtung (10) nach einem der Ansprüche 2 bis 4, **dadurch gekennzeichnet, dass** die Zahnräder (28, 30) der Zahnradpaarung (28, 30) bzw. das Zahnrad und die Zahnstange der Zahnrad-Zahnstangen-Paarung jeweils Blockierbereiche (34, 36) ohne Zähne aufweisen, die eine weitere Drehung der Zahnräder (28, 30) bzw. eine weitere Bewegung der Zahnstange über die der Freigabestellung bzw. die der Sicherungsstellung entsprechende Position hinaus blockieren.

6. Unterfahrschutzeinrichtung (10) nach einem der vorhergehenden Ansprüche, **dadurch gekennzeichnet, dass** die Unterfahrschutzeinrichtung (10) mindestens einen bevorzugt an dem Befestigungsträger (14) angeordneten Sensor (18) umfasst, der dazu ausgebildet ist, die Position der Unterfahrschutzbarriere (12) direkt oder indirekt über die Position, Einstellung und/oder Drehung des Trägerarms (16), des Drehelements (24), des Antriebs (22), der Übersetzungsvorrichtung (20) und/oder von Teilen der Übersetzungsvorrichtung (20) zu bestimmen, wobei der Sensor (18) ferner dazu ausgebildet ist, Daten und bevorzugt eine Information über die Position der Unterfahrschutzbarriere (12) über Leitungen und/oder über Funk an eine Steuereinrichtung eines Fahrzeuges (100) zu übertragen.

7. Unterfahrschutzeinrichtung (10) nach einem der vorhergehenden Ansprüche, **dadurch gekennzeichnet, dass** die Übersetzungsvorrichtung (20) so ausgebildet ist, dass der Trägerarm (16) um mindestens 180° um die durch das Drehelement (24) verlaufende Drehachse schwenkbar ist.

8. Unterfahrschutzeinrichtung (10) nach einem der vorhergehenden Ansprüche, **dadurch gekennzeichnet, dass** der Antrieb (22) als Linearantrieb ausgebildet ist, bevorzugt als durch eine Vorrichtung eines Fahrzeuges (100) antreibbarer hydraulischer Zylinder (22).

9. Unterfahrschutzeinrichtung (10) nach einem der Ansprüche 1 bis 7, **dadurch gekennzeichnet, dass** der Antrieb als Rotationsantrieb ausgebildet ist, bevorzugt als Elektromotor, der mit einer Stromquelle eines Fahrzeuges (100) verbindbar ist.

10. Unterfahrschutzeinrichtung (10) nach einem der vorhergehenden Ansprüche, **dadurch gekennzeichnet, dass** der Befestigungsträger (14) einen Anschlagvorsprung (15) aufweist, der so ausgebildet ist, dass der Trägerarm (16) sowohl in der Freigabestellung als auch der Sicherungsstellung jeweils in einer eine über die Freigabestellung bzw. die Sicherungsstellung hinausgehende Schwenkbewegung des Trägerarms (16) begrenzenden Weise an dem Anschlagsvorsprung (15) anliegt.

11. Fahrzeug (100) umfassend einen Unterfahrschutzeinrichtung (10) nach einem der vorhergehenden Ansprüche, wobei das Fahrzeug (100) bevorzugt ein Lastkraftwagen, ein Anhänger, ein Sattelauflieger oder ein anderes Lasttransportfahrzeug ist, wobei bevorzugt eine Steuervorrichtung des Fahrzeugs (100) so ausgebildet ist, dass eine Aktivierung eines heckseitigen mechanischen Betriebsvorgangs des Fahrzeugs (100), insbesondere ein Kippvorgang, ein Öffnen einer Ladefläche des Fahrzeuges, ein Entleeren eines Ladebehälters des Fahrzeuges, ein Absetzen eines Containers des Fahrzeuges und/oder das Betätigen einer Be-/Entladevorrichtung oder einer hydraulischen Arbeitsvorrichtung des Fahrzeuges durch die Steuervorrichtung blockierbar ist, wenn die Unterfahrschutzbarriere (12) nicht in einer jeweiligen vorbestimmten Sollstellung, z.B. in der Freigabestellung ist.

## Claims

1. Underride protection device (10) with adjustment apparatus (20) for mounting on a vehicle (100) comprising an elongated, normally horizontally disposed underride barrier (12) for securing a rear portion of the vehicle (100) against collision or underride by another vehicle, a mounting bracket (14), a support arm (16) which is rotatably mounted on the mounting bracket (14) and on which the underride barrier (12) is disposed, and an adjustment apparatus (20) for pivoting the support arm (16) in order to adjust the underride barrier (12) between a securing position blocking the area to be secured and a release position releasing the area, wherein the adjustment apparatus (20) comprises a drive (22) and a rotary element (24) rotatable by the drive (22) and connected to the support arm (16), wherein a rotation of the rotary element (24) by the drive (22) causes a pivoting of the support arm (16) relative to the mounting bracket (14), wherein a mechanical transmission apparatus (26) is placed between the drive (22) and the rotary element (24), **characterised in that**
the support arm (16) is mounted on the mounting bracket (14) via only one axis of rotation;
the mechanical transmission apparatus (26) is disposed on the mounting bracket (14); and the transmission apparatus (20) is designed such that the support arm (16) can be pivoted by at least 150° about the axis of rotation passing through the rotary element (24).

2. Underride protection device (10) according to claim 1, **characterised in that** the transmission apparatus (26) comprises a gearwheel pair (28, 30) and/or a gearwheel/rack pair.

3. Underride protection device (10) according to claim 2, **characterised in that** the transmission apparatus (26) comprises a crank lever (32) between the drive (22) and the gearwheel pair (28, 30) or the gearwheel/rack pair.

4. Underride protection device (10) according to claim 2 or 3, **characterised in that** the number of teeth on the two gearwheels (28, 30) of the gearwheel pair (28, 30) or the gearwheel and rack of the gearwheel/rack pair is different so as to provide a certain transmission ratio, in particular a transmission ratio greater than 1 and less than 3, preferably 1.5.

5. Underride protection device (10) according to one of claims 2 to 4, **characterised in that** the gearwheels (28, 30) of the gearwheel pair (28, 30) or the gearwheel and rack of the gearwheel/rack pair each have blocking portions (34, 36) without teeth, which block further rotation of the gearwheels (28, 30) or further movement of the rack beyond the position corresponding to the release position or the position corresponding to the safety position.

6. Underride protection device (10) according to one of the preceding claims, **characterised in that** the underride protection device (10) comprises at least one sensor (18), preferably disposed on the mounting bracket (14), which is designed to determine the position of the underride barrier (12) directly or indirectly via the position, adjustment and/or rotation of the support arm (16), the rotary element (24), the drive (22), the transmission device (20) and/or parts of the transmission apparatus (20), the sensor (18) also being designed to transmit data and preferably information about the position of the underride barrier (12) through wires and/or wirelessly to a control device of a vehicle (100).

7. Underride protection device (10) according to one of the preceding claims, **characterised in that** the transmission device (20) is designed such that the support arm (16) is pivotable by at least 180° about the axis of rotation passing through the rotary element (24).

8. Underride protection device (10) according to one of the preceding claims, **characterised in that** the drive (22) is designed as a linear drive, preferably as a hydraulic cylinder (22) drivable by a device of a vehicle (100).

9. Underride protection device (10) according to one of claims 1 to 7, **characterised in that** the drive is designed as a rotary drive, preferably as an electric motor connectable to a power source of a vehicle (100).

10. Underride protection device (10) according to one of the preceding claims, **characterised in that** the mounting bracket (14) has a stop projection (15) which is designed such that the support arm (16) lies against the stop projection (15) both in the release position and in the securing position, in each case in such a way as to limit a pivoting movement of the support arm (16) beyond the release position or the securing position.

11. Vehicle (100) comprising an underride protection device (10) according to one of the preceding claims, the vehicle (100) preferably being a lorry, trailer, semi-trailer or other load transport vehicle, wherein preferably a control device of the vehicle (100) is designed such that the activation of a mechanical operation at the rear of the vehicle (100), in particular a tipping operation, opening of a loading area of the vehicle, emptying of a load container of the vehicle, the setting down of a container of the vehicle and/or the actuation of a loading/unloading device or a hydraulic apparatus of the vehicle, can be blocked by the control device if the underride barrier (12) is not in a respective predefined target position, for example in the release position.

## Revendications

1. Dispositif de protection anti-encastrement (10) avec un dispositif de réglage (20) pour l'agencement au niveau d'un véhicule (100) comprenant une barrière de protection anti-encastrement (12) oblongue, agencée normalement horizontalement pour la protection d'une zone côté arrière du véhicule (100) contre la percussion ou l'encastrement par un autre véhicule, un support de fixation (14), un bras de support (16) logé de manière à pouvoir tourner au niveau du support de fixation (14), au niveau duquel la barrière de protection anti-encastrement (12) est agencée, et un dispositif de réglage (20) pour le pivotement du bras de support (16), pour régler la barrière de protection anti-encastrement (12) entre une position de protection verrouillant la zone à protéger et une position de libération libérant la zone, dans lequel le dispositif de réglage (20) présente un entraînement (22) et un élément de rotation (24) rotatif par l'entraînement (22) et relié au bras de support (16), dans lequel une rotation de l'élément de rotation (24) provoque par l'entraînement (22) un pivotement du bras de support (16) par rapport au support de fixation (14), dans lequel un dispositif de transmission (26) mécanique est monté entre l'entraînement (22) et l'élément de rotation (24), **caractérisé en ce que**
le bras de support (16) est logé par le biais d'un seul axe de rotation au niveau du support de fixation (14) ;
le dispositif de transmission (26) mécanique est agencé au niveau du support de fixation (14) ;
et le dispositif de transmission (20) est réalisé de sorte que le bras de support (16) puisse être pivoté d'au moins 150° autour de l'axe de rotation s'étendant au travers de l'élément de rotation (24).

2. Dispositif de protection anti-encastrement (10) selon la revendication 1, **caractérisé en ce que** le dispositif de transmission (26) comporte un appariement de roues dentées (28, 30) et/ou un appariement de tige dentée et de roue dentée.

3. Dispositif de protection anti-encastrement (10) selon la revendication 2, **caractérisé en ce que** le dispositif de transmission (26) présente un levier de manivelle (32) entre l'entraînement (22) et l'appariement de roues dentées (28, 30) ou l'appariement de tige dentée et de roue dentée.

4. Dispositif de protection anti-encastrement (10) selon la revendication 2 ou 3, **caractérisé en ce que** le nombre de dents sur les deux roues dentées (28, 30) de l'appariement de roues dentées (28, 30) ou sur la roue dentée et la tige dentée de l'appariement de tige dentée et de roue dentée est différent afin de réaliser un rapport de transmission déterminé, en particulier un rapport de transmission supérieur à 1 et inférieur à 3, de préférence de 1,5.

5. Dispositif de protection anti-encastrement (10) selon l'une des revendications 2 à 4, **caractérisé en ce que** les roues dentées (28, 30) de l'appariement de roues dentées (28, 30) ou la roue dentée et la tige dentée de l'appariement de tige dentée et de roue dentée présentent respectivement des zones de blocage (34, 36) sans dent qui bloquent une autre rotation des roues dentées (28, 30) ou un autre mouvement de la tige dentée au-delà de la position correspondant à la position de libération ou la position de protection.

6. Dispositif de protection anti-encastrement (10) selon l'une des revendications précédentes, **caractérisé en ce que** le dispositif de protection anti-encastrement (10) comporte au moins un capteur (18) agencé de préférence au niveau du support de fixation (14) qui est réalisé afin de déterminer la position de la barrière de protection anti-encastrement (12) directement ou indirectement par le biais de la position, du réglage et/ou de la rotation du bras de support (16), de l'élément de rotation (24), de l'entraînement (22), du dispositif de transmission (20) et/ou de parties du dispositif de transmission (20), dans lequel le capteur (18) est en outre réalisé afin de transmettre des données et de préférence une information sur la position de la barrière de protection anti-encastrement (12) par des câbles et/ou par radio à un dispositif de commande d'un véhicule (100).

7. Dispositif de protection anti-encastrement (10) selon l'une des revendications précédentes, **caractérisé en ce que** le dispositif de transmission (20) est réalisé de sorte que le bras de support (16) puisse pivoter d'au moins 180° autour de l'axe de rotation s'étendant au travers de l'élément de rotation (24).

8. Dispositif de protection anti-encastrement (10) selon l'une des revendications précédentes, **caractérisé en ce que** l'entraînement (22) est réalisé comme entraînement linéaire, de préférence comme cylindre (22) hydraulique entraînable par un dispositif d'un véhicule (100).

9. Dispositif de protection anti-encastrement (10) selon l'une des revendications 1 à 7, **caractérisé en ce que** l'entraînement est réalisé comme entraînement de rotation, de préférence comme moteur électrique qui peut être relié à une source de courant d'un véhicule (100).

10. Dispositif de protection anti-encastrement (10) selon l'une des revendications précédentes, **caractérisé en ce que** le support de fixation (14) présente une saillie de butée (15) qui est réalisée de sorte que le bras de support (16) repose non seulement dans la position de libération mais aussi dans la position de protection respectivement d'une manière délimitant un mouvement pivotant allant au-delà de la position de libération ou la position de protection du bras de support (16) contre la saillie de butée (15).

11. Véhicule (100) comprenant un dispositif de protection anti-encastrement (10) selon l'une des revendications précédentes, dans lequel le véhicule (100) est de préférence un camion, une remorque, une semi-remorque ou un autre véhicule de transport de charge, dans lequel de préférence un dispositif de commande du véhicule (100) est réalisé de sorte qu'une activation d'un processus de fonctionnement mécanique côté arrière du véhicule (100), en particulier un processus de basculement, une ouverture d'une surface de charge du véhicule, une vidange d'un récipient de charge du véhicule, une dépose d'un contenant du véhicule et/ou l'actionnement d'un dispositif de charge/décharge ou d'un dispositif de travail hydraulique du véhicule puisse être bloqué par le dispositif de commande, lorsque la barrière de protection anti-encastrement (12) n'est pas dans une position de consigne prédéterminée respective, par exemple dans la position de libération.
